Europäisches Patentamt

(19) European Patent Office

Office européen des brevets

(11) Numéro de publication: **0 025 401**

**A1**

(12) **DEMANDE DE BREVET EUROPEEN**

(21) Numéro de dépôt: **80401286.2**

(22) Date de dépôt: **09.09.80**

(51) Int. Cl.³: **F 16 C 37/00**
**F 16 L 37/28**

(30) Priorité: **10.09.79 FR 7922603**

(43) Date de publication de la demande:
**18.03.81 Bulletin 81/11**

(84) Etats Contractants Désignés:
**DE GB IT NL SE**

(71) Demandeur: **LE FROID INDUSTRIEL YORK S.A.**
**"Le Courcellor"2, rue Curnonsky**
**F-75017 Paris(FR)**

(72) Inventeur: **de Gaufridy de Dortan, Jacques Marie Gabriel**
**11, rue Jumelière**
**F-44470 Carquefou(FR)**

(72) Inventeur: **Calle, Daniel Georges**
**1, Chemin du Pinier**
**F-44470 Sainte Luce s/Loire(FR)**

(74) Mandataire: **Phélip, Bruno et al,**
**c/o Cabinet HARLE & LECHOPIEZ 21, rue de La Rochefoucauld**
**F-75009 Paris(FR)**

(54) **Dispositif pour le raccordement de deux orifices situés en vis-à-vis à des distances variables.**

(57) Le dispositif comporte une gaine rigide télescopique formée de tubes 10 et 11 emmanchés l'un dans l'autre dont les extrémités sont munies de brides annulaires opposées 2 et 3, une chambre annulaire gonflable 12 emmanchée sur ladite gaine entre les brides 2 et 3, une enveloppe tubulaire externe 4 dont les extrémités sont reliées aux brides 2 et 3 et qui entoure la chambre gonflable 12 de manière à la contenir radialement et des moyens élastiques de rappel 5 sollicitant les brides 1'une vers l'autre.

Application à l'accouplement d'un conteneur isotherme à une installation de réfrigération.

FIG.3

EP 0 025 401 A1

Croydon Printing Company Ltd.

La présente invention concerne un dispositif pour le raccordement de deux orifices situés en vis à vis à des distances variables.

L'invention s'applique plus particulièrement au raccordement de conteneurs isothermes à une installation de réfrigération.

Le transport de denrées périssables s'effectue de plus en plus par navire au moyen de conteneurs réfrigérés. Pour maintenir la température intérieure de ces conteneurs à un niveau suffisamment bas, il importe de les raccorder à une installation de réfrigération installée sur le navire, ladite installation créant une circulation d'air froid à l'intérieur des conteneurs. De manière connue, les conteneurs qui se trouvent à des distances variables de l'installation de réfrigération sont connectés à celle-ci par l'intermédiaire de gaines imperméables extensibles permettant de raccorder les orifices d'entrée et de sortie desdits conteneurs aux orifices de sortie et d'entrée de l'installation de réfrigération génératrice d'une circulation d'air à travers ceux-ci.

Les gaines de raccordement existantes sont généralement constituées par un manchon étanche extensible composé d'une chambre tubulaire étanche gonflable munie à chaque extrémité de brides de fixation ou de contact équipées de joints d'étanchéité, lesdites brides ayant pour fonction de s'appliquer contre les parois entourant les orifices du conteneur et de l'installation à raccorder.

A titre de documents illustrant la technique antérieure on peut citer les brevets FR 1306389 et 76 29536 (publication 2 328 144), ainsi que les brevets US 3 561 725 et 3 713 623.

Le brevet FR 1 306 389 concerne d'une façon générale un accouplement à tubage télescopique, mais celui-ci est prévu non pour le transfert d'un fluide froid mais pour la circulation d'un fluide sous pression.

Le brevet FR 76 29536 est applicable à des installations de réfrigération et concerne un dispositif de raccordement dont la commande est réalisée par un moyen rétractable. Le moyen de commande est une enveloppe gonflable agissant à l'encontre de ressorts. Le dispositif ne comporte pas de tubes télescopiques.

Le brevet US 3 713 623 a pour objet un équipement de valve pour un dispositif complexe de raccordement à enveloppe gonflable.

Enfin le brevet US 3 561 725 décrit un obturateur à volets mobiles utilisable pour le démarrage d'un moteur à réaction. Il est clair que la technique antérieure enseigne déjà des montages à obturateur mobile dans des canalisations.

Les dispositifs connus assurent généralement un bon raccordement entre les conteneurs et l'installation de réfrigération mais ils présentent divers inconvénients qui limitent leur emploi sur une grande échelle..En particulier ces gaines de raccordement sont soit trop fragiles, soit peu pratiques d'emploi, soit encore encombrantes (la longueur de l'accouplement est trop grande) ou d'un coût prohibitif. En outre ces dispositifs d'accouplement ne sont généralement pas réversibles, ils nécessitent que les orifices à raccorder soient préalablement alignés avec soin, ils résistent mal aux vibrations, ils introduisent des pertes de charge élevées dans la circulation du fluide réfrigérant, et sont la cause de pertes thermiques non négligeables.

Le but de la présente invention est donc de proposer un nouveau dispositif de raccordement de faible encombrement c'est à dire procurant une faible longueur de raccordement et de coût très peu élevé, mais qui soit néanmoins robuste, soit capable d'absorber sans dommage et sans perdre son efficacité tout défaut d'alignement des orifices à raccorder, n'introduise que peu de perte de charge dans la circulation du fluide de réfrigération, qui résiste bien aux vibrations notamment pour les installations de réfrigération montées sur les navires, et qui soit bien isolé thermiquement pour éviter les pertes.

Selon l'invention, le dispositif pour le raccordement de deux orifices situés en vis-à-vis à des distances variables, notamment pour l'accouplement d'un conteneur isotherme à une installation de réfrigération, comporte une gaine rigide télescopique dont les extrémités sont munies de brides annulaires opposées en vis-à-vis, ladite gaine télescopique étant formée de deux tubes s'emboîtant l'un dans l'autre et comportant chacun à une extrémité une embase annulaire, les deux tubes étant légèrement coniques et s'évasant en direction de leurs embases annulaires, une chambre annulaire gonflable emmanchée sur ladite gaine entre les brides, une enveloppe tubulaire externe souple dont les extrémités sont reliées auxdites brides et qui entoure la chambre gonflable de manière à la contenir radialement et des moyens élastiques de rappel des brides l'une vers l'autre.

De préférence, le dispositif selon l'invention comporte un obturateur articulé à l'intérieur de la gaine et des moyens de commande dudit obturateur asservis au mouvement de celle-ci, de manière à réaliser automatiquement l'ouverture du conduit interne de passage du fluide de réfrigération lorsque la gaine tubulaire est développée, et à fermer automatiquement ledit passage lorsque la gaine est rétractée.

Selon l'invention, les moyens de commande de l'obturateur comportent avantageusement un organe de déclenchement automatique sensible à la chaleur ledit organe pouvant être par exemple un fusible. On notera cependant que la présence d'un tel obturateur n'est pas obligatoire.

L'invention va maintenant être décrite plus en détail en se référant à un mode de réalisation particulier cité à titre d'exemple non limitatif et représenté sur les dessins annexés dans lesquels :

- Figure 1 représente une vue en perspective du dispositif selon l'invention à l'état déployé,

- Figure 2 représente une coupe axiale du dispositif de la Figure 1 à l'état replié,

- Figure 3 représente une coupe axiale du dispositif de la Figure 2 à l'état déployé,

- Figure 4 représente un détail de la fixation des moyens de rappel du dispositif,

- Figure 5 représente en vue agrandie une coupe axiale d'un joint d'étanchéité du dispositif selon l'invention,

- Figure 6 représente en coupe axiale une variante du système d'obturation du dispositif,

- Figure 7 représente en perspective le dispositif d'obturation de la Figure 6.

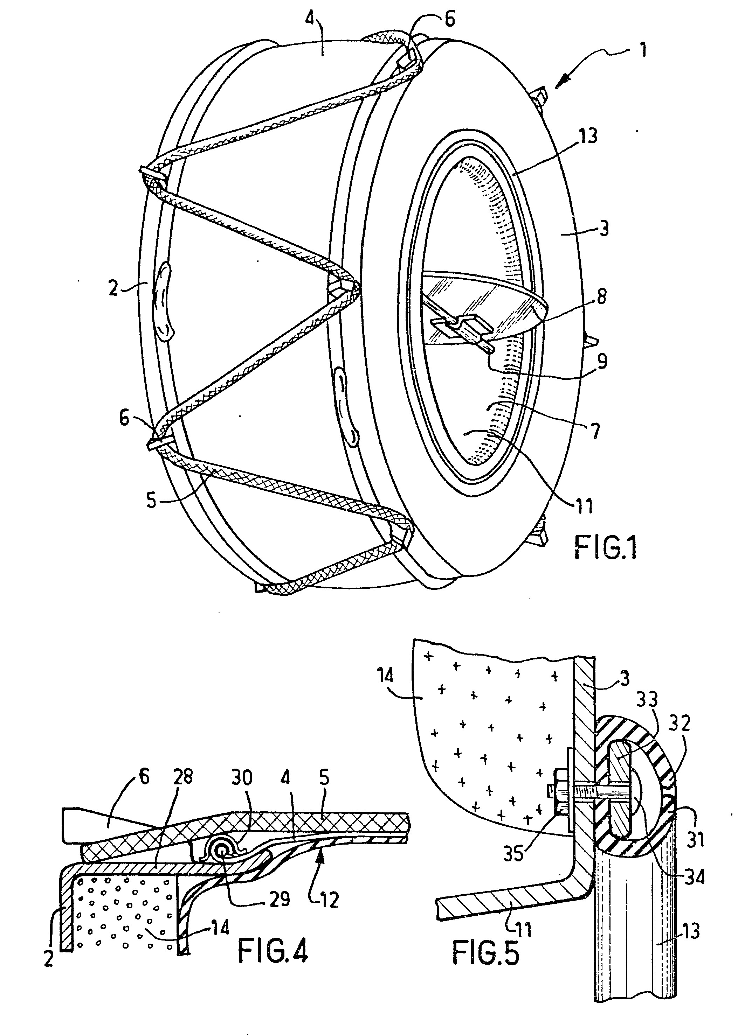

Tel que représenté sur la Figure 1, le dispositif de raccordement 1 selon l'invention se présente sous une forme générale cylindrique tubulaire et comporte à ses extrémités opposées deux flasques ou brides métalliques annulaires 2 et 3 réunies par une enveloppe souple externe tubulaire 4 en forme de soufflet et par un lien élastique 5 tel qu'un sandow reliant lesdites flasques en zigzag et accroché sur celles-ci autour de pattes ou crochets de fixation 6.

Le dispositif selon l'invention comporte un alésage tubulaire central 7 formant un conduit pour le fluide de réfrigération de l'installation, un volet de fermeture 8 monté pivotant autour d'un axe fixe 9 pouvant obturer ledit alésage en cas de besoin.

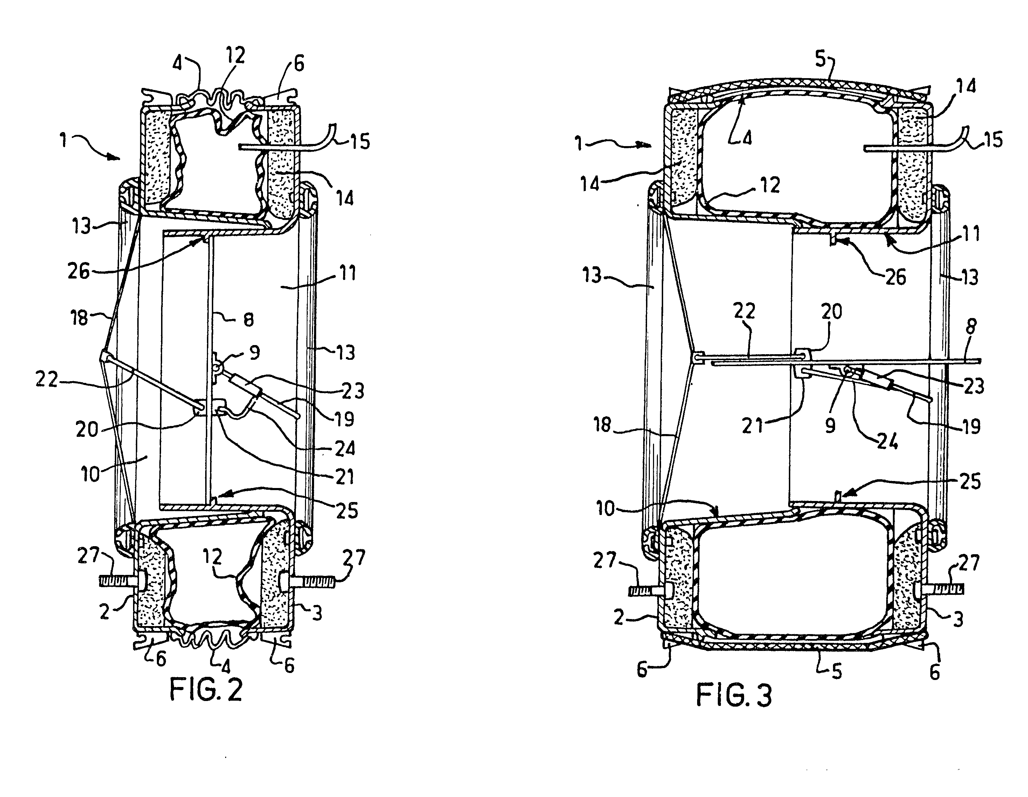

Tel que représenté sur les Figures 2 et 3, le dispositif de raccordement 1 selon l'invention se compose essentiellement d'une gaine télescopique interne rigide formée de deux tubes 10 et 11 s'emboîtant l'un dans l'autre, d'une chambre annulaire gonflable 12 emmanchée sur ladite gaine télescopique et une enveloppe tubulaire externe souple 4 en forme de soufflet qui entoure la chambre gonflable de manière à la contenir radialement lorsque celle-ci est mise sous pression. Les deux tubes 10 et 11 constituant la gaine rigide télescopique interne du dispositif comportent chacun à une extrémité une embase annulaire formant les flasques ou brides de fixation 2 et 3 précitées, lesdites brides étant sollicitées l'une vers l'autre par un lien élastique 5 tel qu'un sandow tendu entre des crochets 6 portés respectivement par chacune des deux brides 2 et 3. Sur les faces opposées desdites brides 2 et 3 sont fixés des joints d'étanchéité annulaires 13 à doubles lèvres d'étanchéité et sur les faces internes des deux brides 2 et 3 sont fixés des coussins en mousse synthétique 14 de forme annulaire destinés à entrer en contact avec les faces latérales de la chambre gonflable 12 et à protéger celle-ci, ladite chambre étant gonflée par l'intermédiaire d'un conduit 15 traversant la flasque ou bride 3 et le coussin en mousse correspondant et relié à une source d'air comprimé non représentée.

Le tube 11 de la gaine télescopique interne du dispositif selon l'invention à un diamètre inférieur au diamètre du tube 10 de manière à pouvoir s'emmancher dans celui-ci tel que représenté sur la Figure 2, ledit tube 11 comportant dans son alésage un volet de fermeture 8 articulé autour d'un axe fixe 9 fixé diamétralement dans le tube 11, les orifices d'entrée des deux tubes 10 et 11 sont traversés sensiblement diamétralement chacun par un lien élastique respectivement 18 et 19, lesdits liens étant fixés respectivement en croix l'un par rapport à l'autre tel que schématisé sur les Figures 2 et 3.

Le volet de fermeture 8 comporte des pattes de fixation 20 et 21 fixées symétriquement par rapport au volet sur les deux faces opposées de celui-ci et d'un même côté par rapport à son axe de pivotement 9. Le milieu du lien élastique 18 est relié à la patte de fixation du volet 8 par l'intermédiaire d'une tringle rigide 22 dont la longueur est telle que lorsque ledit volet 8 est fermé, c'est-à-dire lorsque le dispositif de raccordement est rétracté, le lien élastique 18 est mis sous tension par la tringle 22 prenant appui sur celui-ci pour repousser élastiquement le volet 8 en position de fermeture tel que représenté sur la Figure 2. Le lien élastique 19 dont les extrémités sont fixées sur le bord d'entrée du tube 11 est également maintenu sous tension par l'intermédiaire d'un lien reliant son milieu à l'axe 9 de pivotement du volet 8, ce lien comportant une partie fusible 23 destinée à disparaître en cas d'élévation anormale de la température avec pour effet de libérer le lien élastique 19 lequel est également relié à la patte de fixation 21 du volet 8 par l'intermédiaire d'un lien souple 24 qui est complètement détendu lorsque le dispositif de raccordement est rétracté avec le volet 8 fermé tel que représenté sur la Figure 2. On notera qu'il est prévu des butées diamétralement opposées 25 et 26 dans l'alésage du tube 11, lesdites butées servant à limiter la course de fermeture du volet 8.

Bien que parfaitement réversible, le dispositif de raccordement selon l'invention est monté de préférence de telle sorte que le tube inférieur 11 de la gaine télescopique du dispositif serve de tube d'entrée au fluide réfrigérant, ceci pour réduire encore les pertes de charge au niveau de la jonction entre le tube interne 11 et le tube externe 10 de la gaine de circulation du dispositif. Autrement dit, le dispositif sera fixé sur la paroi entourant la sortie de fluide de l'installation de réfrigération au moyen de la bride 3 servant d'embase annulaire au tube interne 11 et au moyen de boulons 27 (Figures 2 et 3), l'étanchéité étant assurée par un joint à doubles lèvres 13 pressé entre la bride 3 et ladite paroi entourant la sortie du fluide. Inversement, au niveau de l'entrée en retour du fluide réfrigérant dans l'installation frigorifique, l'autre dispositif de raccordement utilisé sera fixé sur la paroi entourant ladite entrée dans l'installation par l'intermédiaire de la bride 2 servant d'embase au tube externe 10 de la gaine télescopique du dispositif, l'étanchéité étant également assurée par un joint à doubles lèvres 13 également pincé entre ladite bride 2 et la paroi de l'installation.

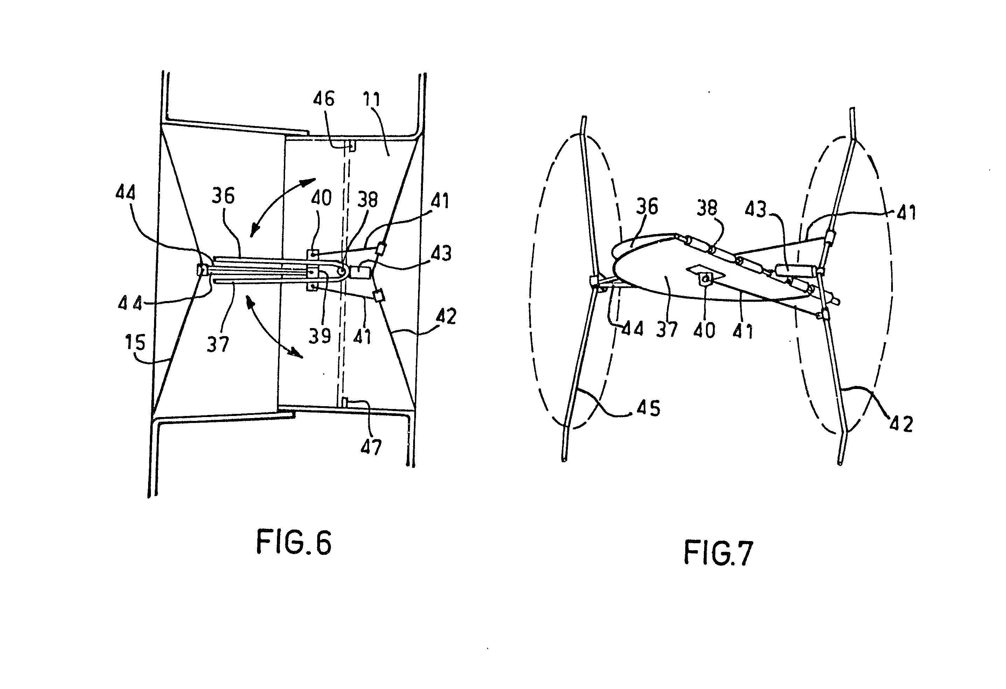

La Figure 4 représente un agrandissement d'un détail de la Figure 3 situé à la partie supérieure gauche de la coupe du dispositif représenté sur ladite figure. Sur cet agrandissement, on remarque le bord rabattu 28 de la bride 2 sur lequel est fixé, par exemple par soudure, un crochet 6 autour duquel passe le lien élastique 5 de rappel formé par exemple d'un sandow. Le rebord rabattu 28 de la bride 2 forme un logement tubulaire dans lequel est logé le coussin annualaire 14 en mousse contre lequel prend appui la chambre gonflable 12. Ladite chambre gonflable 12 est contenue radialement par une enveloppe souple 4 de préférence en matériau inextensible tel que de la toile forte, cette enveloppe souple 4 étant fixée sur le bord rabattu 28 par l'intermédiaire d'un jonc 29 emprisonné à l'intérieur du bord roulé de ladite enveloppe, l'ensemble étant lui-même emprisonné à l'intérieur d'un clip 30.

Sur la Figure 5 est représentée une coupe agrandie du joint d'étanchéité à doubles lèvres 13 fixé sur la bride 3 du dispositif selon l'invention, la partie agrandie se situant au niveau supérieur du joint 13 représenté sur le côté droit de la Figure 3. Sur la Figure 5 nous remarquons que le joint 13 est de forme sensiblement torique, fendu du côté opposé à la bride 3, la fente qui est circulaire définissant deux lèvres d'étanchéité 31 et 32 destinées à s'appliquer contre la paroi en vis-à-vis entourant un des orifices à raccorder. Le joint 13 est fixé sur la bride 3 par l'intermédiaire d'une couronne circulaire 33 serrée contre la bride 3 par l'intermédiaire de boulons 34 régulièrement répartis autour de la couronne 33 et bloqués par des écrous 35 noyés à l'intérieur des coussins en mousse 14 de telle sorte que lesdits écrous ne forment pas des points durs susceptibles de déchirer l'enveloppe gonflable 12. Les deux lèvres 31 et 32 des joints 13 sont orientées sensiblement radialement en sens opposés.

Le dispositif de raccordement selon l'invention fonctionne de la façon suivante :

- le dispositif est généralement fixé sur les parois entourant les orifices de sortie ou d'entrée de flui- de réfrigérant de l'installation de réfrigération. Lorsqu'il est utilisé pour assurer le raccordement de l'orifice de sortie du fluide réfrigérant hors de l'installation, le dispositif selon l'invention est fixé sur la paroi de l'installation par l'intermédiaire des boulons 27 (Figure 2) appliquant la bride 3 de la gaine télescopique ainsi que son joint d'étanchéité 13 contre ladite paroi, le sens de circulation prévu étant dirigé de la droite vers la gauche sur la Figure 2. Lorsque le dispositif est destiné à raccorder l'orifice d'entrée dans l'installation du fluide réfrigérant qui a circulé à l'intérieur des conteneurs, c'est de préférence la bride 2 du dispositif, c'est-à-dire celle raccordée au tube externe de la gaine télescopique qui est fixée sur la paroi entourant l'orifice d'entrée du fluide dans l'installation, ceci afin de réduire les pertes de charge au niveau du joint entre les deux tubes 10 et 11 de la gaine télescopique.

Au repos, le dispositif de raccordement se présente sous la forme repliée telle que représentée sur la Figure 2. Dans cet état, le tube intérieur 11 de la gaine télescopique est emmanché à l'intérieur du tube externe 10, la chambre gonflable 12 est dégonflée et les liens élastiques de rappel 5 sollicitent les deux brides 2 et 3 l'une vers l'autre de telle sorte que l'enveloppe tubulaire externe souple 4 forme une succession de plis à la manière d'un soufflet. La tige rigide 22 prenant appui sur le lien élastique 18 exerce un couple de fermeture sur le volet 8 qui est arrêté dans sa rotation autour de son axe 9 par les deux butées 25 et 26, obturant ainsi le passage du fluide à travers le dispositif de raccordement.

Après qu'un conteneur a été déposé au voisinage de la paroi de l'installation de réfrigération, de telle sorte que les orifices de sortie et d'entrée de fluide de réfrigération se situent sensiblement en vis-à-vis des orifices d'entrée et de sortie du circuit de réfrigération du conteneur, de l'air sous pression est envoyé dans la chambre 12 par l'intermédiaire du tuyau d'admission 15 de telle sorte que ladite chambre se dilate et exerce une poussée à l'encontre de l'action des sandow 5 de manière à écarter les deux brides 2 et 3 jusqu'à ce que lesdites brides prennent appui respectivement contre les parois entourant les orifices à raccorder. La chambre gonflable 12 est maintenue radialement aussi bien vers l'extérieur par l'enveloppe souple 4 que vers l'intérieur par la gaine télescopique rigide constituée par les deux tubes 10 et 11, ladite gaine protégeant également la chambre 12 contre toute action mécanique susceptible de la détériorer.

A l'état déployé tel que représenté sur la Figure 3, la chambre 12 est gonflée telle une chambre à air d'un pneumatique d'automobile, les sandow 5 sont tendus et la gaine télescopique est complètement déployée. Sous la traction exercée par le lien 18 et la tige 22 reliée à celui-ci, le volet 8 est soumis à un couple de rotation autour de son axe 9 qui entraîne l'ouverture automatique dudit volet lors du déploiement du dispositif de raccordement. Le volet étant ouvert au maximum, le lien souple 24 reliant la patte de fixation 21 au lien élastique 19 se trouve tendu (voir Figure 3). Dans le but d'assurer la fermeture automatique du volet 8 en cas d'élévation anormale de la température notamment en cas d'incendie, le lien élastique 19 est prévu beaucoup plus puissant que le lien élastique 18 fixé sur le tube 10. En cas d'élévation anormale de la température, notamment en cas d'incendie, la partie fusible 23 fond et libère le puissant lien élastique 19 qui a tendance à se détendre en tirant sur le lien souple 24, ce qui fait pivoter le levier 8 autour de son axe 9 à l'encontre de l'action du lien élastique 18 opposé jusqu'à ce que le volet 8 vienne en appui contre les deux butées 25 et 26 de fermeture condamnant ainsi automatiquement le passage à travers le dispositif de raccordement selon l'invention.

Grâce à l'emploi combiné de deux liens élastiques 18 et 19 de puissance inégale et d'un fusible 23 maintenant en permanence sous tension le lien le plus puissant 19, on obtient une sécurité contre l'incendie condamnant automatiquement l'accès à l'intérieur du conteneur à travers le dispositif selon l'invention.

En variante, tel que représenté sur les Figures 6 et 7, l'obturateur peut être composé non plus d'un volet unique 8 mais de deux demi-volets semi-circulaires 36 et 37 articulés entre eux le long d'un diamètre autour d'un axe fixe 38 fixé diamétralement dans l'alésage du tube intérieur 11 de la gaine télescopique du dispositif de raccordement selon l'invention. Chaque demi-volet comporte symétriquement disposées de part et d'autre de celui-ci, des pattes de fixation 39 et 40, les pattes externes 40 étant reliées par des liens souples 41 à un lien élastique puissant 42 tendu en travers de l'entrée de l'alésage du tube 11 et maintenu sous tension par l'intermédiaire d'un organe de tension fusible 43 reliant le milieu dudit lien 42 à l'axe d'articulation 38 des deux demi-volets. Les pattes de fixation 39 internes sont chacunes reliées par l'intermédiaire d'une tringle rigide 44 à un lien élastique 45 tendu diamétralement en travers de l'orifice d'entrée de l'alésage du tube externe 10 de la gaine télescopique, ledit lien élastique 45 étant choisi volontairement moins puissant que le lien élastique 42 fixé à l'entrée du tube 11.

En position d'ouverture, c'est-à-dire lorsque le dispositif de raccordement est développé (Figure 6) la tension exercée par le lien élastique 45 sur les deux volets 36 et 37 par l'intermédiaire des tiges 44 exerce un couple de rotation sur lesdits volets autour de leur axe de pivotement 38, ce couple les rabattant l'un contre l'autre sur l'axe de la gaine télescopique, libérant ainsi le passage à travers ladite gaine pour le fluide réfrigérant. La vue en perspective représentée sur la Figure 7 illustre parfaitement cette position de repos des demi-volets 36 et 37 repliés l'un sur l'autre et dégageant le passage à travers le dispositif de raccordement selon l'invention.

En cas d'élévation excessive de la température notamment en cas d'incendie, le fusible 43 assurant la jonction entre le milieu du lien 42 et l'axe de pivotement des demi-volets fond et se rompt, libérant ainsi le lien 42 qui se détend exerçant du même coup une traction sur les liens souples 41 qui exercent un couple de rotation sur les deux demi-volets autour de leur axe de pivotement 38 à l'encontre de la sollicitation exercée par le lien élastique 45 moins puissant. En se détendant, le lien 42 provoque donc la rotation des deux demi-volets autour de l'axe 38 et la fermeture automatique du conduit à travers la gaine du dispositif de raccordement selon l'invention, la course de fermeture des deux demi-volets 36 et 37 étant limitée par les deux butées 46 et 47 situées dans l'alésage du tube 11.

Le dispositif de raccordement selon l'invention est prévu pour assurer la jonction entre deux orifices situés sensiblement en vis-à-vis l'un de l'autre, lesdits orifices étant ménagés dans des faces en regard sensiblement parallèles. Toutefois étant donné qu'il est difficile d'obtenir un positionnement rigoureux des éléments les uns par rapport aux autres notamment lorsqu'il s'agit de conteneurs disposés en face d'une installation de réfrigération, il est prévu que le dispositif selon l'invention puisse absorber sans dommage et sans perdre son efficacité tout défaut d'alignement des orifices à raccorder ainsi que tout défaut de parallélisme des faces en regard dans lesquelles les orifices sont ménagés. Pour ce faire, les tubes 10 et 11 emboîtables constituant la gaine rigide télescopique interne ne sont pas prévus cylindriques mais, au contraire, légèrement coniques et évasés en direction de leurs brides d'extrémité 2 et 3, de telle sorte qu'en cas de mésalignement, et compte tenu d'un certain jeu indispensable au montage correct des tubes l'un dans l'autre, le tube interne 11 puisse s'orienter légèrement de biais par rapport au tube externe 10, les faces opposées des deux brides d'extrémité 2 et 3 pouvant faire entre elles un angle maximum d'au moins 15 degrés sans dommage On notera à ce propos, que le tube extrême 10 n'a pas pour fonction de guider le tube interne 11 lors de son coulissement télescopique mais simplement d'assurer un certain centrage dudit tube et surtout d'empêcher l'enveloppe 12 de se dilater vers l'intérieur du dispositif et également de protéger ladite enveloppe contre toute atteinte à l'intérieur de son alésage.

Outre le fait que le dispositif selon l'invention comporte une protection intérieure de sa chambre gonflable 12, sous la forme de la gaine télescopique formée des deux tubes 10 et 11, ce dispositif de raccordement se révèle étanche d'une part grâce à ses joints d'extrémité 13 et d'autre part grâce au fait que la chambre gonflable 12 est fortement appliquée latéralement contre les coussins 14 ce qui assure une étanchéité radiale complétée par l'étanchéité assurée en outre par l'enveloppe externe 4. L'étanchéité de ce dispositif autorise son utilisation en vue de l'accouplement d'un conteneur ou de tout dispositif muni d'orifices à une installation de ventilation, de pompage de liquide basse pression, de transport d'un produit pulvérulent, de poussières, etc... En outre de par sa conception, le dispositif selon l'invention offre une excellente isolation thermique entre le fluide circulant à l'intérieur dudit dispositif et l'atmosphère ambiante externe.

En outre, de par sa simplicité même, le dispositif résiste très bien aux vibrations du fait que toutes les pièces sont montées avec un jeu assez large et formées de pièces relativement simples ne contenant que peu ou pas de soudures.

Enfin, la prévision d'un volet de fermeture du conduit offert par ce dispositif assure une protection supplémentaire en cas d'incendie ou en cas d'incident survenant en cours de réfrigération des conteneurs.

Bien entendu la portée de l'invention n'est pas limitée au seul mode de réalisation décrit ci- dessus à titre d'exemple non limitatif, mais elle couvre également toute variante qui ne différerait que par des détails de construction.

C'est ainsi que la section de passage offerte par la gaine télescopique du dispositif peut être aussi bien circulaire, que carrée ou rectangulaire ou encore de toute autre forme.

De même au lieu de liens isolés 18 et 19 pour la fermeture automatique des volets, on peut prévoir un filet élastique servant à la fois de dispositif de commande de l'ouverture et de fermeture du volet, mais également de filtre empêchant un corps étranger d'une certaine grosseur de pénétrer à l'intérieur des conteneurs réfrigérés.

REVENDICATIONS

1. Dispositif pour le raccordement de deux orifices situés en vis-à-vis à des distances variables notamment pour l'accouplement d'un conteneur isotherme à une installation de réfrigération, caractérisé en ce qu'il comporte une gaine rigide télescopique dont les extrémités sont munies de brides annulaires opposées en vis-à-vis, ladite gaine/étant formée de deux tubes s'emboîtant l'un dans télescopique l'autre et comportant chacun à une extrémité une embase annulaire, les deux tubes étant légèrement coniques et s'évasant en direction de leurs embases annulaires, une chambre annulaire gonflable emmanchée sur ladite gaine entre les brides, une enveloppe tubulaire externe souple dont les extrémités sont reliées auxdites brides et qui entoure la chambre gonflable de manière à la contenir radialement et des moyens élastiques de rappel des brides l'une vers l'autre.

2. Dispositif selon la revendication 1, caractérisé en ce que les faces opposées des deux brides annulaires de la gaine télescopique comportent chacune un joint d'étanchéité annulaire à double lèvre entourant le bord d'entrée de l'alésage de ladite gaine.

3. Dispositif selon l'une des revendications 1 ou 2, caractérisé en ce qu'il comporte un obturateur articulé dans l'alésage de la gaine et des moyens de commande dudit obturateur qui sont asservis aux variations de longueur de ladite gaine.

4. Dispositif selon la revendication 3, caractérisé en ce que l'obturateur est formé d'au moins un volet pivotant autour d'un axe fixé dans l'alésage du tube de plus faible diamètre de la gaine et en ce que les moyens de commande du volet comportent un premier lien élastique tendu en travers de l'alésage du tube de plus fort diamètre de la gaine et une tige rigide reliant ledit premier lien à un point du volet distant de l'axe de pivotement.

5. Dispositif selon la revendication 4, caractérisé en ce que les moyens de commande du volet comportent un second lien élastique tendu en travers de l'alésage du tube interne de plus faible diamètre de la gaine, un troisième lien souple reliant ledit second lien à un point du volet distant de l'axe de pivotement de celui-ci et un organe de tension du second lien le reliant à l'axe fixe de pivotement du volet.

6. Dispositif selon la revendication 5, caractérisé en ce que l'organe de tension du second lien est fusible et en ce que le second lien est tendu sous une tension supérieure à celle s'exerçant sur le premier lien lorsque la gaine télescopique est déployée.

7. Dispositif selon l'une quelconque des revendications 4 à 6, caractérisé en ce que l'obturateur se compose de deux volets articulés autour d'un axe diamétral fixé dans l'alésage du tube de plus faible diamètre de la gaine télescopique.

0025401

FIG.1

FIG.4

FIG.5

FIG.3

FIG.2

FIG.7

FIG.6

**0025401**

Numéro de la demande

Office européen
des brevets

**RAPPORT DE RECHERCHE EUROPEENNE**

EP 80 40 1286

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 1 306 389 (HUFNAGL) <br> * Page 2, colonne 2, lignes 28-47; figures 8-9 * <br><br> -- <br><br> FR - A - 2 328 144 (STAL REFRIGERATION) <br> * Page 3, lignes 30-39; page 4, lignes 1-25 * <br><br> -- <br><br> GB - A - 1 344 251 (HALL-TERMOTANK) <br> * Page 1, lignes 43-61, lignes 68-81; page 2, lignes 47-58; lignes 94-119; figures 1-3 * <br><br> -- <br><br> US - A - 3 713 623 (PEARSON) <br> * Colonne 1, lignes 51-67; colonne 2, lignes 1-5, lignes 52-62; figure 1 * <br><br> -- <br><br> FR - A - 2 058 239 (AIR BALANCE) <br> * Page 2, lignes 4-12; page 4, lignes 33-40; page 5, lignes 1-12; figures ,2 * <br><br> -- <br><br> US - A - 3 561 725 (TORRES) <br> * Figure 1; figures 5-8 * <br><br> --- | 1 <br><br><br><br><br> 1,2 <br><br><br><br><br><br> 3 <br><br><br><br><br><br> 1-3 <br><br><br><br><br> 5,6 <br><br><br><br><br> 7 | F 16 L 37/00 <br> 37/28 <br><br><br><br><br><br> **DOMAINES TECHNIQUES RECHERCHES (Int. Cl. 3)** <br><br> F 16 L <br> A 62 C <br> B 63 J <br><br><br><br><br><br><br> **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons <br><br> &: membre de la même famille, document correspondant |

Le présent rapport de recherche a été établi pour toutes les revendications

| Lieu de la recherche | Date d'achevement de la recherche | Examinateur |
|---|---|---|
| La Haye | 12-12-1980 | ANGIUS |

OEB Form 1503.1   06.78